# EUROPEAN PATENT APPLICATION

(11) **EP 0 674 975 A1**
(43) Date of publication of application: **04.10.1995**
(21) Application number: 95300905.7
(22) Date of filing: 14.02.1995
(51) Int. Cl.: B25J 9/16, G05D 1/00

(54) **Maintenance system**

(30) Priority: 29.03.1994 US 219561
(71) Applicant: GENERAL ELECTRIC COMPANY, Schenectady, NY 12345 (US)
(72) Inventor: Corby, Nelson Raymond, Jr., Scotia, New York 12302 (US); Meenan, Peter Michael, Scotia, New York 12302 (US); Solanas, Claude Homer, Morgan Hill, California 95037 (US); Vickerman, David Clark, Pleasanton, California 94588 (US)
(74) Representative: Pratt, Richard Wilson

(57) **Abstract**

An enhanced reality maintenance system for operating in a hazardous environment employs an environment modeler which creates a computer model of the environment. An environment renderer creates a plurality of images, each corresponding to a viewing location and orientation, 'viewpoint'. A remotely operated robotics arm is attached at a fixed end to a stationary structure, has a utility package, such as a video camera, attached to a distal end, and actuators which move the robotics arm to desired locations within the environment. The position and orientation of of the robotics arm, are determined by a position and attitude (P&A) sensing unit. This information is passed to an robotics arm renderer which creates an image from a prestored model of the robotics arm, viewed from several different viewpoints. The may be interactively determined as an offset from the current position and orientation of the utility package. Alternative embodiments include an image archive and comparison unit capable of storing images linked to information of the image acquisition, retrieving stored images and transforming the images to match the image acquisition parameters. Also, another embodiment employs an automated flight planner which chooses a desired flight path based on operator input. The environment, robotics arm size, shape, and motion constraints, are analyzed to result in a trajectory which most closely fits the provided path information which would not cause a collision with structures in the environment. This trajectory, if acceptable, is then automatically executed by a path execution unit.

## Description

### 1. Field of the Invention

The present invention relates to a maintenance system, a robotics arm and/or computer enhanced environment visualization of a robotics arm.

### 2. Description of Related Art

Mechanical arms or robot arms have been used in many areas. They are used to paint cars, weld pieces or inspect structures. Typically, one end of a robot arm is fixed to a stationary structure, a fixed end, with the other end being able to move in many dimensions, being the distal end. The arm may have several links connected to joints which move in several dimensions. The end of the last link is the distal end of the mechanical arm. Usually the repair or inspection device is attached to the distal end.

Robotics arms are also useful for inspection of machines or structures which are in environments which are inaccessible or very hazardous for humans. Several such environments would be inside a nuclear reactor boiler, deep beneath the sea, in a forest fire or in an area contaminated with a poisonous gas. The high temperatures, radiation exposure, high pressure, or toxic effects of these environments are clearly dangerous for humans.

Sensors at the distal end of the robotics arm may be a testing or imaging device, such as a video camera, underwater TV cameras, ultrasound flaw detection transducers, thermal imagers and point probes such as microphones.

The use of robotics arms also typically require a method of determining the position and orientation of the distal end of the robotics arm (and/or its subparts) with respect to the operating environment. This is required to successfully move the robotics arm through the inspection environment without colliding with structures in the environment.

Robotics arms can be used to determine physical changes in an environment. One problem arises is that irregularities need to be monitored over a period of time (on the order of years) to determine the rate of deterioration. Presently this is accomplished by moving the robotics arm to a particular position and videotaping the structure or device which is to be examined. At a later date the robotics arm is positioned at the same site and current data (such as a video image) is compared to previous data. Since it is very difficult to obtain sensor data with the same parameters, it is difficult to determine differences in the structure over time. This tends to be a hit-or-miss type of adjustment with a very subjective determination being made by the operator.

Another problem which arises in inspecting or examining structures with a robotics arm is that of planning the actual trajectory of the robotics arm needed to move it from one site to the next. The environment is complex enough that it is very difficult (and very time consuming) to attempt to move the arm manually. Currently this usually is done by the operator from environment blueprints and knowledge of the robotics arm size and shape. Realistically, it is very difficult to visualize the complete geometry of the 3D environment and whether a given pathway actually will allow passage of the real robotics arm. Since control of the ROV is complex and demanding, it becomes a very difficult task for the operator to determine a correct path while manually controlling the progress of the robotics arm.

Currently, there is a need for a system which can provide efficient remote inspection and repair in inaccessible or hazardous environments.

### SUMMARY OF THE INVENTION

A remote maintenance system employs an environment modeler for receiving parameters defining structures in a hazardous or inaccessible environment. The environment modeler produces a computer generated model of the environment.

A robotics arm fixed at one end to a stationary structure of the environment carries a utility package at its distal end (typically for imaging, measuring and repairing structures in the environment). The robotics arm is capable of moving its distal end to a desired position and orientation within the environment.

A position and attitude sensing (P&A) unit senses the position and orientation of each link of the robotics arm and determines the position and orientation of the distal end of the robotics arm relative to the environment.

A viewpoint for rendering a computed view of the environment is determined by the operator (either by inputting viewpoint coordinates or by selecting from a preestablished list of viewpoint coordinates) and provided to an environment renderer which generates an image corresponding to the shapes defined by the environment geometry when viewed from the selected viewpoint.

The position and orientation of the distal end of the robotics arm are provided to the environment renderer along with offsets which define the position and orientation of the utility package. The resultant viewpoint (formed by combining the position and orientation of the distal end of the robotics arm and the offset displacements of the utility package) will allow the environment renderer to produce images corresponding to views of the environment as "seen" from the viewpoint of the utility package. The imagery produced by the environment renderer will vary in real-time according to the measured position and orientation of the distal end of the robotics arm varies.

, position and orientation of the robotic arm links and distal end are provided to an robotics arm renderer (along with operator indicated viewpoint). The robotics arm renderer (making use of the geometry file which defines the shape of the robotics arm) generates an image of the robotics arm as seen from the same viewpoint used by the environment renderer.

A video mixer superimposes the image of the robotics arm on the image of the environment and displays the superimposed images on a monitor, thereby allowing an operator to visualize the position of the robotics arm relative to its environment.

Several viewpoints and superimposed images may be produced simultaneously to provide multiple views of the robotics arm in the environment.

In an alternate embodiment, sensory data from the utility package are stored along with auxiliary information such as the spatial location of the sensors and parameters employed in acquiring the sensor data and sensor images. Any of these past images or past sensor data may later be recalled and transformed (if necessary) so as to correspond to the current position and orientation of the robotics arm and the utility package. Digital signal processing techniques may then be performed to determine the rate of corrosion or rate of crack growth over time, a very important parameter for nuclear reactor maintenance. In addition, a signal processing and visualization unit allows current or past signals from other modalities, such as ultrasound scans, to be merged with past archived signals. Pertinent data such as past inspection results and operator observations may also extracted from an inspection database automatically and displayed for operator consideration.

In another alternate embodiment, means are provided for the operator to select a trajectory, being a time-ordered sequence of locations to be visited by the distal end of the robotics arm. Also included are the relative orientations of all sublinks of the robotic arm. Environment geometry, robotics arm geometry and the selected trajectory, are provided to an automated positioner which causes the robotics arm to move according to the trajectory.

An embodiment of the present invention seeks to provide a system for visualizing the position and orientation of a robotics arm and utility package within a known environment.

Another embodiment of the present invention seeks to provide a robotics arm which efficiently navigates through a hazardous environment crowded with objects.

Another embodiment of the present invention seeks to provide a maintenance system which has the ability to sense physical characteristics of a structure or device, archive a spatial representation of physical characteristics and retrieve these spatial representation at a later date to be compared against other spatial representations in order to determine deterioration or changes in a structure or device.

The invention, both as to organization and content, will be better understood and appreciated, along with other objects and features thereof, from the following illustrative description taken in conjunction with the drawings, in which:

Figure 1 is a simplified block diagram of an augmented reality maintenance system according to the present invention.

Fig. 2 is a more detailed block diagram of automated positioner of Fig. 1.

Fig. 3 is a more detailed block diagram of the archive and comparison (A&C) device of Fig. 1.

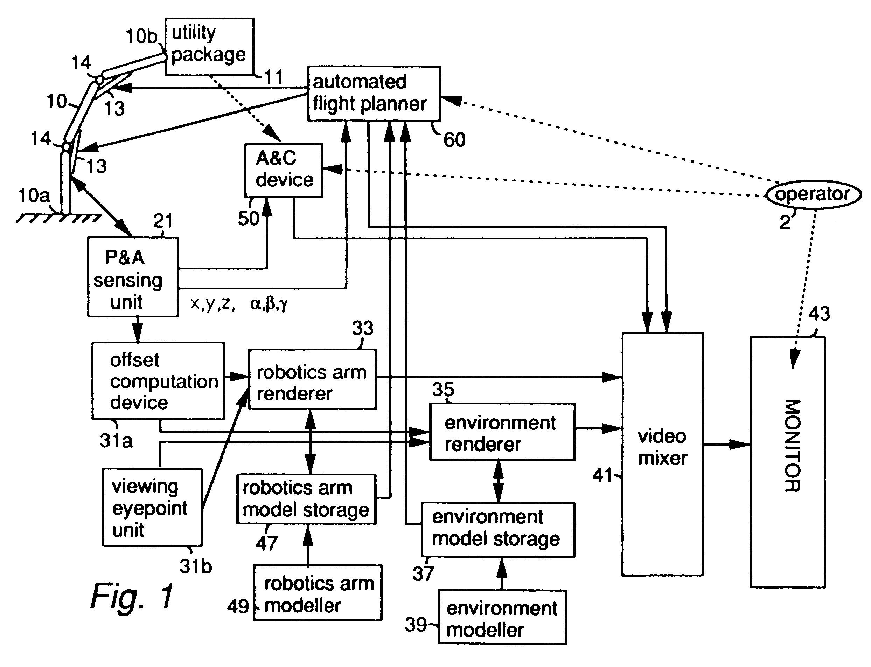

Figure 1 is a simplified block diagram of the major components of an augmented reality maintenance system according to the present invention.

In Figure 1, parameters defining an environment, such as blueprint measurements, position and shape measurements, and material types may be manually provided to an environment modeler 39. These parameters may also be automatically provided by automated spatial measurement from ultrasound or laser distance measurement devices. Environment modeler 39 constructs a computer model from the parameters it receives which may be rapidly manipulated in near-real-time. The model is stored in environment model storage device 37.

Parameters defining the geometry of a robotics arm 10 and its motion constraints are provided to a robotics arm modeler 49. Robotics arm modeler 33 constructs a computer model from the parameters it receives. The model of the robotics arm is stored in robotics arm model storage device 47.

An environment renderer 35 has the capability of accessing the model in environment model storage device 37, and displaying it as viewed from any location and orientation, known as a 'viewpoint'. It also has the capability of creating several displays of the model viewed from several different viewpoints simultaneously.

Robotics arm 10 has a series of arm links 12 connected at joints 14 which are moved by a plurality of actuators 13. A fixed end 10a of robotics arm 10 is connected to a stationary structure at a known point. A distal end 10b is attached to a utility package.

Utility package 11 may be a spatial imaging device, such as a video camera which acquires information such crack and corrosion in a wall of a nuclear reactor boiler, for example. Utility package 11 may also be an ultrasound device capable of detecting irregularities in a structure or device, or any such modality used in structure examination. Utility package 11 could also be a point measurement probe such as a microphone or accelerometer to measure vibrations. Also, more that one sensor could be operating at any time. Utility package 11 may also employ a welding torch, drill or other repair device.

Joints 14 interact with a position and attitude sensing (P&A) unit 21 which determine a position (x,y,z) and orientation (α,β,γ) of each of the links 12 of robotics arms 10, and may thereby determines the ultimate position and orientation of distal end 10b by combining the positions and orientations of the individual links. P&A unit 21 may also determine the position and orientation of distal end 10b by directly tracking distal end with radio frequency signals or other conventional tracking means.

The position (x,y,z) and orientation (α,β,γ) determined by P&A sensing unit 21 is provided to an robotics arm renderer 33. Robotics arm renderer 33 creates an image of a prestored model of the robotics arm 10 from model storage 47 at location (x,y,z) and orientation (α,β,γ) as viewed from an viewpoint provided to it. Robotics arm renderer 33 has the capability of creating several images of the robotics arm model viewed from several different viewpoints simultaneously. The position and orientation of the robotics arm 10, produced by P&A sensing unit 21, are supplied to offset computation device 31a. This device calculates another viewpoint corresponding to the current position of utility package 11.

The environment renderer 35 produces a number of images of the environment corresponding to viewpoints supplied to it. In Fig. 1, two viewpoints are supplied - one from the viewpoint unit 31b and another from the offset computation device 31a. The environment renderer 35 produces two image signals, one showing the environment viewed from the same viewpoint supplied to the ROV renderer 33, and a second showing the environment as seen from the viewpoint of the utility package 11 at distal end 10b of robotics arm 10.

The viewpoint provided to renderer 33 and environment renderer 35 may be predetermined values which have been typed into, or previously stored in, viewpoint unit 31b.

The images pertaining to the same viewpoint are provided to a video mixer 41. In the embodiment shown in Fig. 1, two viewpoints are employed, with two images produced by environment renderer 35 and one by the robotics arm renderer 33. The robotics arm image and the environment image for a single viewpoint are provided to video mixer 41, to superimpose the robotics arm image on the environment image resulting in a superimposed image showing the relative position of the arm or in the simulated environment, which corresponds to the actual position of the ROV relative to the actual environment.

The image produced on monitor 43 may consist of a number of sub-images comprising the main image. One such sub-image is the result of merging the image of the environment produced by the environment renderer 35 with the image of the robotics arm produced by the robotics arm renderer 33. The viewpoint for both renderers is the same and is supplied by viewpoint unit 31b. The second sub-image may be a view of the environment as seen from the point of view of the utility package 11 on distal end 10b of robotics arm 10. The third sub-image appearing on monitor 43 is image produced by the utility package 11.

In alternative embodiments, more or fewer viewpoints, images may be used to create more or fewer superimposed images. Also, in another alternative embodiment, an operator may select or change the viewpoints and the offsets during operation.

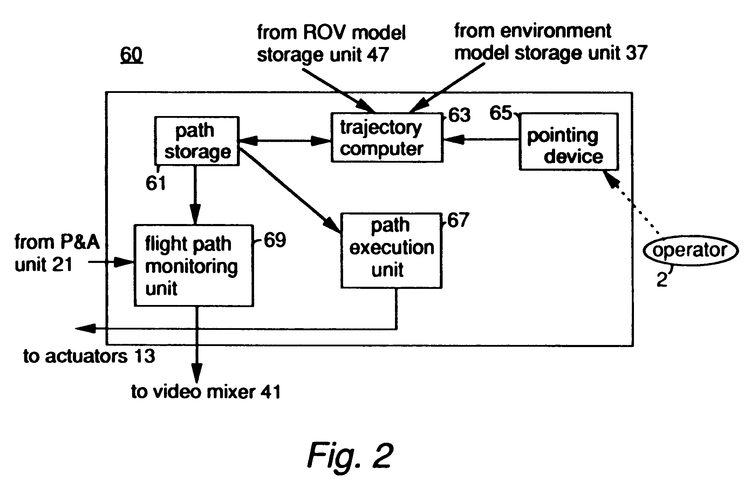

In another embodiment, the present invention further employs an automated flight planner 60 which is coupled to environment model storage device 37, robotics arm model storage device 47 and actuators 13. Fig. 2 is a more detailed block diagram of automated flight planner 60 of Fig. 1. In Fig. 2, automated flight planner 60 is composed of an pointing device 65, a path storage device 61 for storing intended paths, or trajectories of distal end (and sublinks) 10b of robotics arm 10, a path execution unit 67 and a trajectory computer 63. Pointing device 65 is used by operator 2 to choose destination locations in the environment which the distal end 10b of robotics arm 10 is to visit, which are provided to trajectory computer 63. Trajectory computer determines a trajectory which fits the motion constraints of the arm, is within the reach of robotics arm 10, and one in which links 12 do not collide with objects in the environment, that most closely fits the path defined by operator 2. The computed trajectory may then be displayed to the operator on monitor 43 via video mixer 41 of Fig. 1.

If the computed trajectory is acceptable, path execution unit 67 drives actuator 13 to move the robotic arm according to the trajectory calculated by trajectory computer 63. The current calculated trajectory is then executed by robotics arm 10 within the actual environment upon command by operator 2.

Operator 2 may also define destination points by typing symbolic names, or numerical locations into pointing device 65.

Optionally, a path monitoring unit 69 reads the selected trajectory from path storage device 61, and receives the current position and orientation of the distal end (and sublinks) 10b of robotics arm 10, and indicates on monitor 43, via video mixer 41, the selected trajectory and the current path followed by robotics arm 10.

Since rapid, accurate determination of irregularities is very important in many cases, such as off-line maintenance of a nuclear power plant, and costs are related to the length of time the plant is off-line, it is important to collect, retrieve and compare image data rapidly. In conventional systems, video images are acquired of suspect sites of a structure. At a later date, robotics arm 10 is directed manually to one of the suspect sites. A current video image is acquired, and the images are viewed side-by-side, usually in real-time, to determine the degree of deterioration. The comparisons are only valid when the archived image and the current image have the similar imaging parameters. Imaging parameters vary from one modality to another. For example, video cameras imaging parameters include the viewpoint, field-of-view, iris opening, zoom setting etc. By varying these parameters, the image becomes different.

The information from past inspections at a given site may take many forms such as photographs, video frames, video sequences on videotape, computer generated images which visualize data such as 2D ultrasonic inspection data, thermal imagery as well as inspectors reports and notes and non-image data e.g audiotapes.

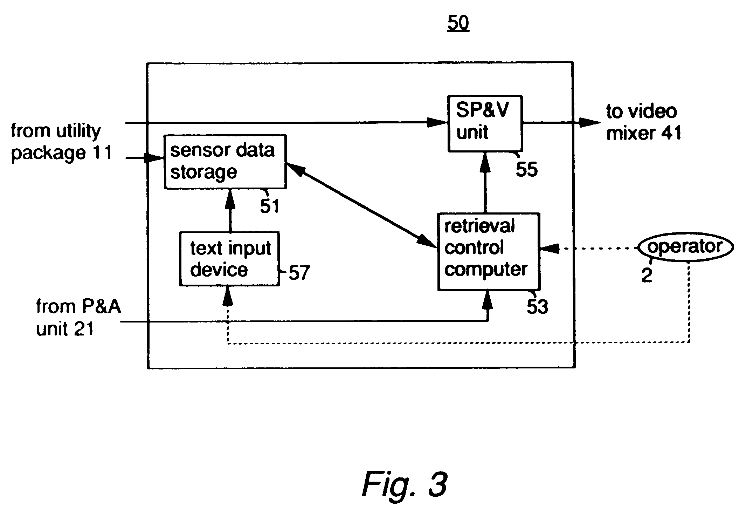

In another embodiment of the present invention, the invention comprising all of the previously described elements of Fig. 1, with automated flight planner 60 being optional, further comprises an archive and comparison (A&C) device 50. Fig. 3 is a more detailed block diagram of the A&C device of Fig. 1. In Fig. 3, A&C device 50 utilizes a sensor data storage device 51, capable of storing spatial imagery with location, orientation and acquisition parameters linked to each image. These parameters define the identity of the site imaged, when it was imaged, the viewpoint, the modality of the imager (visual, thermal, ultrasonic etc.) and description of values relating to the image (crack length, corrosion area etc.). In addition, storage device 51 provides storage for textual information such as inspectors reports and storage of non-image signal data such as recordings of microphones or accelerometers carried by robotics arm 10. The textual data, and non-image signal data, also are linked to specific inspection sites and time stamped for identification at a later retrieval time. Much of the information provided to storage device 51 originates in utility package 11 carried by the robotics arm 10. Textual information may be provided by a text input device 57.

A&C device 50 also includes a retrieval control computer 53, coupled to the data storage device 51, the P&A unit 21, the signal processing unit and visualization (SP&V) unit 55. Retrieval control computer 53, upon command by operator 2, retrieves all past data from storage device 51 which is pertinent to the site currently being examined and visited by the utility package at distal end 10b of robotics arm 10. SP&V unit 55 receives sensor data from utility package 11 and past inspection data from storage device 51 under control of the retrieval control computer 53. SP&V unit 55 transforms images archived in sensor data storage device 51, according to the position, orientation and imaging parameters, to match those of images currently being acquired by utility package 11. The signals may then be placed on the same basis for comparison. SP&V unit 55 may either display the two images to operator 2 via video mixer 41 on monitor 43 in a side-by-side format, superimpose them, display image differences or employ any appropriate image processing methods thus highlighting regions for special attention by operator 2. The differences may be highlighted by color coding, graphical display etc. SP&V unit 55 may also display its results of comparisons and image processing in any appropriate form for consideration by operator 2.

SP&V unit 55 may also operate on non-image signals, such as sound data, to cause two signals to have the same acquisition parameters, and perform comparisons and signal processing on the transformed signals.

Retrieval control computer 53 may select two archived images to compare against each other instead of one archived and one current image. SP&V unit 55 will transform, one image, the other image, or both, to have the same viewpoint and imaging parameters allowing them to be directly compared. A number of archived images for the same site acquired at different times, may be transformed by the SP&V unit 55, to compose a 'time-lapse' movie when they are played back a time-ordered sequence.

While several presently preferred embodiments of the present novel invention have been described in detail herein, many modifications and variations will now become apparent to those skilled in the art. It is our intent therefore, to be limited only by the scope of the appending claims and not be the specific details and instrumentalities presented by way of explanation herein.

## Claims

1. A remote maintenance system for inspection and repair of structures in an environment comprising:
a) a remotely operated robotics arm having
1. a fixed end attached to a known reference point,
2. a distal end opposite the fixed end,
3. a plurality of serially connected links from the fixed end to the distal end,
4. a plurality of joints with one between each pair of connected links,
5. a plurality of actuators capable of moving the robotics arm in a desired manner;
b) a utility package, connected to the distal end of the robotics arm, for sensing physical characteristics of structures in the environment;
c) a position and attitude (P&A) sensing unit for sensing a position and orientation of each link of the robotics arm;
d) environmental model storage device capable of retaining computer graphic information regarding the environment of the robotics arm;
e) environment modeler for receiving parameters defining objects in an environment and producing a computer generated model of the environment and storing the model in the environment model storage device;
f) environment renderer coupled to the environment model storage device for generating an image of the environment from the environment model as viewed from at least one viewpoint;
g) robotics arm renderer coupled to the P&A sensing unit adapted for generating an image of the robotics arm links at the positions and orientations corresponding to that of the actual robotics arm links, generated from a prestored model of the robotics arm as viewed from at least one viewpoint;
h) monitor for displaying a video signal;
i) video mixer coupled to the environment renderer and the robotics arm renderer for displaying the image of the robotics arm on the image of the environment on the monitor, thereby allowing an operator to visualize the position of the robotics arm relative to its environment.

2. The remote maintenance system of claim 1 further comprising viewpoint unit coupled to the robotics arm renderer and the environment renderer which provides the viewpoint employed in image rendering.

3. The remote maintenance system of claim 1 further comprising offset computation device coupled to the P&A sensing unit which provides the viewpoint, being an offset to location and orientation of the distal end of the robotics arm received from the P&A sensing unit, employed by the environment renderer and the robotics arm renderer in image rendering.

4. The remote maintenance system of claim 1 further comprising a repair device connected to the distal end of the robotics arm for effecting repair of a selected structure.
